# EUROPÄISCHE PATENTANMELDUNG

(11) **EP 0 544 086 A2**
(43) Veröffentlichungstag der Anmeldung: **02.06.1993**
(21) Anmeldenummer: 92117358.9
(22) Anmeldetag: 10.10.1992
(51) Int. Cl.: B62D 5/22, B62D 5/12

(54) **Hydraulische Hilfskraft-Lenkeinrichtung für Kraftfahrzeuge**

(30) Priorität: 28.11.1991 DE 4139085
(71) Anmelder: ROBERT BOSCH GMBH, 70442 Stuttgart (DE)
(72) Erfinder: Ahner, Peter, Dipl.-Ing., W-7140 Ludwigsburg-Ossweil (DE); Schustek, Siegfried, Dr. Dipl.-Ing., W-7257 Ditzingen (DE)

(57) **Zusammenfassung**

Es sollen der Fahrbahnkontakt und das Anlenkverhalten der Lenkeinrichtung verbessert werden.

Die hydraulische Hilfskraft-Lenkeinrichtung (10) hat einen doppelt wirkenden Lenkzylinder (12), dessen Kolbenstange (13) mit einem Lenkgetriebe (11) verbunden ist. Ein im Lenkzylinder (12) angeordneter Arbeitskolben (21) ist längsbewegbar auf der Kolbenstange (13) geführt. Am Arbeitskolben (21) greifen auf beiden Seiten Druckfedern (36, 37) an, die kolbenabgewandt an der Kolbenstange (13) abgestützt sind. Die elastische Ankopplung des Arbeitskolbens (21) an die Kolbenstange (13) läßt im Momenten-Null-Durchgang der Hilfskraft-Lenkeinrichtung (10) trotz des im Lenkzylinder (12) eingeschlossenen Druckmittels Relativbewegungen der Kolbenstange (13) zu.

Die hydraulische Hilfskraft-Lenkeinrichtung (10) ist für Kraftfahrzeuge verwendbar.

## Beschreibung

### Stand der Technik

Die Erfindung geht aus von einer hydraulischen Hilfskraft-Lenkeinrichtung nach der Gattung des Hauptanspruchs. Es ist schon eine solche Lenkeinrichtung durch die EP-A-0 328 002 bekannt.

Bei derartigen sogenannten closed-center-Lenkeinrichtungen oder bei Speicherlenkeinrichtungen ist das Lenkventil geschlossen, solange vom Fahrzeugführer kein Lenkmoment ausgeübt wird. Somit ist das Druckmittelvolumen in den beiden Zylinderkammern des Lenkzylinders zwischen dem Arbeitskolben und dem Lenkventil eingeschlossen. Von den Fahrzeugrädern zum Lenkrad übertragene Rückstellmomente werden daher weitgehend am Lenkzylinder abgestützt. Am Lenkrad ist somit nur ein kleines, von der Elastizität der Druckmittelleitungen zwischen dem Lenkzylinder und dem Lenkventil sowie der Kompressibilität des Druckmittels abhängiges Differenzmoment spürbar. Damit geht der sogenannte Fahrbahnkontakt weitgehend verloren. Bringt der Fahrzeugführer dagegen ein Lenkmoment auf, so muß erst die Ventilüberschneidung des Lenkventils mittels der Elastizität in der Lenksäule überfahren werden, bis eine hilfskraftunterstützte Verschiebung der Kolbenstange im Lenkzylinder einsetzen kann. Die Lenkeinrichtung weist daher auch ein unharmonisches Anlenkverhalten auf.

### Vorteile der Erfindung

Die erfindungsgemäße hydraulische Hilfskraft-Lenkeinrichtung mit den kennzeichnenden Merkmalen des Hauptanspruchs hat demgegenüber den Vorteil, daß aufgrund der elastischen Ankopplung des Arbeitskolbens an die Kolbenstange im sogenannten Momenten-Null-Durchgang, das ist in der Regel bei Geradeausfahrt des Kraftfahrzeugs, durch das von den Druckfedern hervorgerufene Moment in der Lenkeinrichtung ein guter Fahrbahnkontakt hergestellt wird. Vorteilhaft ist außerdem das harmonische Einsetzen der Hilfskraftunterstützung ohne Sprünge.

Durch die in den Unteransprüchen aufgeführten Maßnahmen sind vorteilhafte Weiterbildungen und Verbesserungen der im Hauptanspruch angegebenen hydraulischen Hilfskraft-Lenkeinrichtung möglich.

Die im Anspruch 2 angegebenen Elemente für die elastische Ankopplung des Arbeitskolbens an die Kolbenstange sind besonders günstig hinsichtlich ihrer sicheren Funktion und ergeben bei der im Anspruch 3 genannten Charakteristik ein besonders günstiges Anlenkverhalten.

### Zeichnung

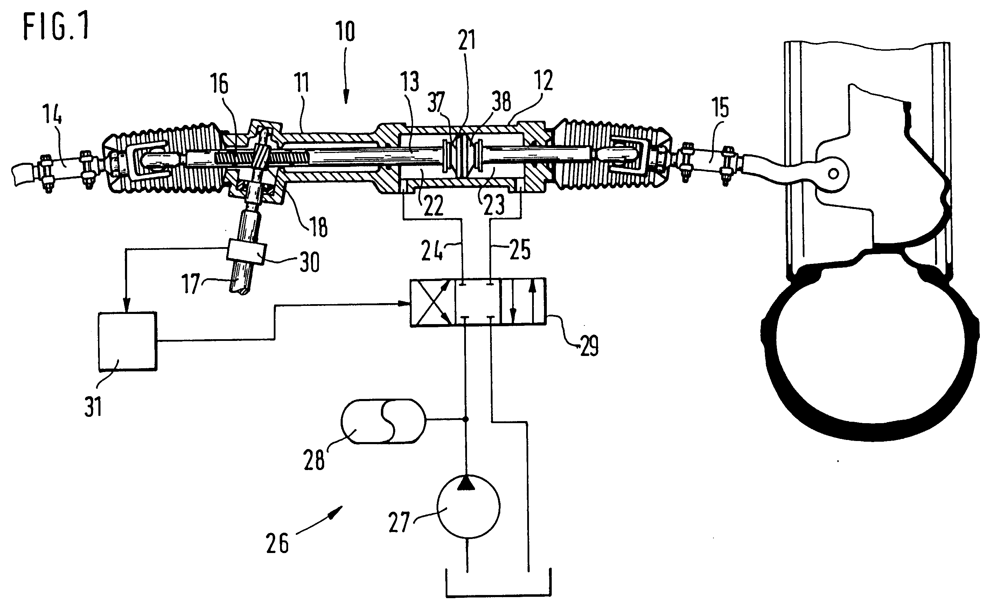

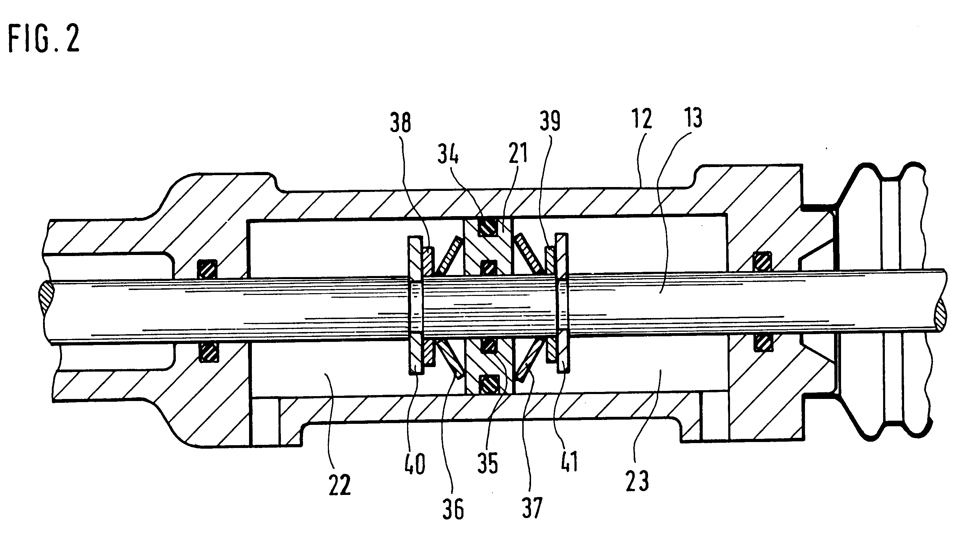

Ein Ausführungsbeispiel der Erfindung ist in der Zeichnung vereinfacht dargestellt und in der nachfolgenden Beschreibung näher erläutert. Es zeigen Figur 1 eine hydraulische Hilfskraft-Lenkeinrichtung mit einem Lenkzylinder, dessen Arbeitskolben elastisch an die Kolbenstange angekoppelt ist, und Figur 2 einen Längsschnitt des Lenkzylinders in anderem Maßstab.

### Beschreibung des Ausführungsbeispiels

Die in Figur 1 dargestellte hydraulische Hilfskraft-Lenkeinrichtung 10 weist ein Lenkgetriebe 11 mit einem doppelt wirkenden Lenkzylinder 12 auf. Eine Kolbenstange 13 des Lenkzylinders 12 ist als Spurstange ausgebildet und steht beidendig mit Lenkschubstangen 14, 15 in Verbindung. Ein Abschnitt der Kolbenstange 13 ist als Zahnstange 16 ausgeformt, an der ein mit einer Lenksäule 17 eines im übrigen nicht dargestellten Kraftfahrzeugs verbundenes Antriebsritzel 18 angreift.

Der Lenkzylinder 12 besitzt zwei durch einen Arbeitskolben 21 voneinander getrennte Arbeitsräume 22 und 23. Die beiden Arbeitsräume 22 und 23 stehen durch Leitungen 24, 25 mit einer Druckbeschaffungseinrichtung 26 in Verbindung. Diese besteht im wesentlichen aus einer Öldruckpumpe 27 und einem Druckmittelspeicher 28. Bei der dargestellten hydraulischen Hilfskraft-Lenkeinrichtung handelt es sich also um eine sogenannte Speicher-Servolenkung. In den Leitungen 24, 25 ist noch ein Lenkventil 29 angeordnet, welches als 4/3-Wegeventil ausgebildet ist und in der gezeichneten Stellung die Druckbeschaffungseinrichtung 26 vom Lenkzylinder 12 trennt. Das Lenkventil 29 ist in Abhängigkeit von einem Signal eines an der Lenksäule 17 angeordneten Sensors 30 mittels eines Steuergerätes 31 schaltbar. Der Sensor 30 kann ein Differenzwinkelsensor oder ein Drebmomentsensor für elektrische Ausgangssignale sein, oder im Lenkventil als verdrehelastisches Glied integriert sein.

Aus Figur 2 ist eine nicht starre Anordnung des Arbeitskolbens 21 auf der Kolbenstange 13 deutlicher erkennbar. Der mit Dichtringen 34, 35 gegen den Lenkzylinder 12 und die Kolbenstange 13 druckmitteldicht abgedichtete Arbeitskolben 21 ist längsbewegbar auf der Kolbenstange geführt. Auf beiden Seiten des Arbeitskolbens 21 greift je eine Druckfeder 36, 37 an, die bei dem dargestellten Ausführungsbeispiel als Tellerfeder ausgebildet ist. Stattdessen können auch Schraubendruckfedern, Vollgummifedern oder Gummi-Hohlfedern verwendet werden. Die vorgespannten Druckfedern 36, 37 sind kolbenabgewandt an der Kolbenstange 13 abgestützt, und zwar unter Zwischenlage je eines Stützringes 38, 39 an je einem formschlüssig an der Kolbenstange 13 angreifenden Sicherungsring 40, 41. Zweckmäßigerweise haben die Druckfedern 36, 37 eine progressive Federkennlinie.

Beim Momenten-Null-Durchgang der Hilfskraft-Lenkeinrichtung 10 nimmt, wie dargestellt, das Lenkventil 29 seine Grundstellung ein, in welcher das Druckmittelvolumen in den Arbeitsräumen 22 und 23 des Lenkzylinders 12 eingeschlossen ist. Es sind dennoch von den Fahrzeugrädern herrührende Rückstellmomente durch Längsbewegungen der Kolbenstange 13 bei relativ zum Lenkzylinder 12 unbeweglichem Arbeitskolben 21 auf die Lenksäule 17 übertragbar. Umgekehrt ist es in diesem Steuerzustand der Lenkeinrichtung 10 möglich, vom Fahrer ausgeübte Lenkmomente zu den Fahrzeugrädern zu übertragen. Aufgrund der progressiven Kennlinie der Druckfedern 36, 37 werden mit zunehmendem Lenkwinkel progressiv ansteigende Gegenmomente wirksam, die bei einsetzender Hilfskraftunterstützung kompensiert werden.

## Patentansprüche

1. Hydraulische Hilfskraft-Lenkeinrichtung (10) für Kraftfahrzeuge mit einem auf beiden Seiten von Druckfedern (36, 37) belasteten Arbeitskolben (21) eines druckbeaufschlagten, doppelt wirkenden Lenkzylinders (12), dessen Kolbenstange (13) mit einem Lenkgetriebe (11) verbunden ist, und mit einem Lenkventil (29), mit dem in Abhängigkeit vom Signal eines an einer Lenksäule (17) angeordneten Sensors (30) von einer Druckbeschaffungseinrichtung (26) bereitgestelltes Druckmittel in den Lenkzylinder (12) einsteuerbar ist, dadurch gekennzeichnet, daß die Druckfedern (36, 37) kolbenabgewandt an der Kolbenstange (13) abgestützt sind, während der Arbeitskolben (21) längsbewegbar auf der Kolbenstange (13) geführt ist.

2. Hydraulische Hilfskraft-Lenkeinrichtung nach Anspruch 1, dadurch gekennzeichnet, daß als Federn (36, 37) Tellerfedern, Schraubendruckfedern, Gummifedern und dgl. verwendet sind.

3. Hydraulische Hilfskraft-Lenkeinrichtung nach Anspruch 1 oder 2, dadurch gekennzeichnet, daß die Druckfedern (36, 37) eine progressive Kennlinie haben.
